# FASCICULE DE BREVET EUROPEEN

(11) **EP 2 687 283 B1**
(45) Date de publication et mention de la délivrance du brevet: **10.02.2016**
(21) Numéro de dépôt: 13176660.2
(22) Date de dépôt: 16.07.2013
(51) Int. Cl.: B01D 53/86

(54) **Installation et procédé de traitement de gaz avec régénération, pour échangeur interne à la régénération.**
Anlage und Verfahren zur Gasbehandlung mit Regenerierung für inneren Regenerierungstauscher
Facility and method for treating gas with regeneration, for an exchanger within the regeneration

(30) Priorité: 18.07.2012 FR 1256928
(43) Date de publication de la demande: 22.01.2014
(73) Titulaire: Vinci Environnement, 92500 Rueil Malmaison (FR)
(72) Inventeur: Vizier, Nicolas, 74700 SALLANCHES (FR); Thibaut, Romain, 78360 MONTESSON (FR)
(74) Mandataire: Novagraaf Technologies

(56) Documents cités:
- EP-A1- 0 913 185
- EP-A1- 1 676 627
- WO-A1-2010/027617
- JP-A- 10 192 657
- US-A1- 2011 008 230

## Description

L'invention concerne une installation et un procédé de traitement de gaz.

Il s'agit de dénoxifier du gaz dans un réacteur catalytique et de régénérer périodiquement le catalyseur de façon performante en perturbant peu le rythme de la dénoxification.

A priori, le réacteur catalytique sera de type low dust (à poussières réduites).

On entend par dénoxification d'un gaz la réduction par voie catalytique des oxydes d'azotes contenus dans ledit gaz. Les oxydes d'azotes, désignés de façon générale par la formule NOx, comprennent notamment les composés suivants: NO, NO2, N2O.

Les procédés de dénoxification s'appliquent notamment aux gaz issus de l'incinération des ordures ménagères, et permettent de diminuer la teneur en oxydes d'azote des gaz finalement rejetés à l'atmosphère, de sorte que cette teneur soit inférieure au seuil réglementaire imposé.

Dans les procédés connus, les gaz à traiter sont introduits en entrée d'un réacteur catalytique, en phase de fonctionnement, transitent par un catalyseur approprié afin de subir la dénoxification souhaitée, avant d'être rejetés à l'atmosphère.

Généralement le procédé de dénoxification par voie catalytique est une étape supplémentaire dans le traitement des gaz. La dénoxification est réalisée après l'étape de dépoussiérage et de déchloration/désulfuration.

Au contact des gaz contenant les oxydes d'azote, le catalyseur se charge progressivement en différents sels issus des réactions de combinaison entre NH3 et HCl/SO2 résiduels, et perd de ce fait une partie de son activité. II est donc nécessaire de régénérer périodiquement le catalyseur, afin qu'il retrouve ses performances, et que, en sortie, les teneurs en NOx restent inférieures au seuil réglementaire.

Ainsi, en phase de régénération, les procédés connus prévoient de faire traverser le catalyseur par un gaz chauffé à une température suffisamment importante pour provoquer la sublimation des sels et leur évacuation sous forme gazeuse (NH3, SO2, HCl).

Toutefois, dans les réalisations connues, les gaz issus de la régénération sont évacués de la même façon que les gaz traités, voire simultanément dans un même conduit lorsque le réacteur est pourvu de plusieurs modules dont certains sont en phase de fonctionnement tandis que les autres sont en phase de régénération. Or, les gaz issus de la régénération contiennent sous forme de gaz les polluants issus des sels ôtés du catalyseur. Ainsi, les teneurs maximales réglementaires en polluants des gaz rejetés à l'atmosphère ne sont plus respectées (HCl, SO2, NH3) .

Dans une évolution des réalisations connues, FR-A-2880287 propose une installation de traitement de gaz, comprenant :
- un circuit de traitement de gaz à dénoxifier où est disposé un réacteur catalytique de dénoxification de gaz qui :
   * présente une première entrée de gaz communiquant avec un conduit d'alimentation en gaz à dénoxifier et une première sortie de gaz communiquant avec un conduit d'évacuation de gaz au moins en partie dénoxifié,
   * et contient un catalyseur apte à dénoxifier une partie au moins du gaz entré dans le réacteur catalytique et au contact duquel passe une partie au moins dudit gaz entré,
- un circuit de régénération d'une partie au moins du catalyseur du réacteur catalytique, ce circuit présentant une première entrée de gaz dans le réacteur catalytique communiquant en amont avec un conduit d'alimentation en gaz de régénération adapté à régénérer le catalyseur et une première sortie de gaz communiquant avec un conduit d'évacuation de gaz issu de la régénération, le conduit d'alimentation en gaz de régénération communiquant avec une sortie de gaz de moyens de chauffage de gaz dont une entrée de gaz communique avec le conduit d'alimentation en gaz à dénoxifier.

Un problème encore à traiter concerne l'optimisation énergétique de la dénoxification et de la régénération périodique du catalyseur.

A cette fin, il est proposé que les moyens de chauffage de gaz comprennent un échangeur gaz/gaz où circulent, sans se mélanger, à une première température, une partie au moins du gaz issu de la régénération et, à une seconde température inférieure à la première, du gaz issu du conduit d'alimentation en gaz à dénoxifier.

Pour favoriser cette performance, on recommande que le conduit d'évacuation de gaz issu de la régénération communique avec le conduit d'alimentation en gaz à dénoxifier, en aval de l'échangeur gaz/gaz, pour un mélange de gaz.

Pour un traitement en amont du réacteur des gaz à dénoxifier, il est conseillé que la communication entre le conduit d'évacuation de gaz issu de la régénération et celui d'alimentation en gaz à dénoxifier soit située en amont d'au moins un appareil de traitement apte à diminuer la teneur de gaz à dénoxifier en au moins l'un des composés suivants: SO₂, HCl, lui-même disposé en amont d'un piquage de gaz vers les moyens de chauffage de gaz.

Pour le chauffage des gaz destinés à servir de gaz de régénération, on conseille par ailleurs que les moyens de chauffage des gaz comprennent l'un parmi :
- un brûleur à gaz combustible dont une entrée reçoit du gaz issu du conduit d'alimentation en gaz à dénoxifier, et,
- un échangeur de chaleur où circulent, sans se mélanger :
   * des produits qui arrivent chauds dans l'échangeur de chaleur, et,
   * du gaz qui, à une température inférieure à celle des produits arrivants, est reçu à ladite entrée de gaz qui communique avec le conduit d'alimentation en gaz à dénoxifier.

Dans une version relativement performante de l'installation, il est recommandé que l'intégralité du gaz issu de la régénération soit apporté dans le conduit d'alimentation en gaz à dénoxifier, après passage dans l'échangeur gaz/gaz. Ainsi, il n'y aura aucun recyclage du gaz (directement) issu de la régénération

Pour une performance encore accrue, on prévoit, en alternative à la solution précédente, que l'installation comprenne au contraire un conduit de recyclage pour recycler du gaz issu de la régénération, le conduit de recyclage recevant pour cela ce gaz en entrée et délivrant en sortie du gaz en mélange avec celui ayant déjà circulé dans certains au moins des moyens de chauffage de gaz.

Dans ce cas, il pourra être judicieux, pour la performance thermique et les composés chimiques attendus, que le conduit de recyclage est connecté :
- à une extrémité amont, au conduit d'évacuation de gaz issu de la régénération, en amont de leur entrée dans l'échangeur gaz/gaz et/ou,
- à une extrémité aval, entre une sortie la plus chaude des moyens de chauffage de gaz et ladite première entrée de gaz de régénération dans le réacteur catalytique.

Pour favoriser aussi une composition performante des gaz, on recommande :
- qu'une vanne de répartition soit disposée pour répartir le gaz issu de la régénération entre celui entrant dans le conduit de recyclage et celui dirigé vers le conduit d'alimentation en gaz à dénoxifier, dans un rapport supérieur à 2/1, et de préférence supérieur à 3/1, et/ou,
- que le conduit de recyclage apporte, dans le conduit d'alimentation en gaz de régénération du réacteur catalytique, en un endroit situé entre les moyens de chauffage des gaz et ladite première entrée de gaz de régénération dans le réacteur catalytique, un débit volumique de gaz issu de la régénération supérieur à au moins deux fois, et de préférence à au moins trois fois, celui issu du conduit d'alimentation en gaz à dénoxifier.

Pour tirer parti de l'optimisation énergétique de la dénoxification compartimentée, avec régénération périodique partielle du catalyseur, comme dans FR-A-2880287 ou FR-A-2855767, on recommande que le réacteur catalytique de l'installation comprenne :
- plusieurs modules séparés les uns des autres qui, chacun:
   * contiennent du catalyseur de dénoxification,
   * pour un fonctionnement du module dans une phase de dénoxification des gaz, présentent une dite première entrée de gaz s'ouvrant alors sur le conduit d'alimentation en gaz à dénoxifier et une dite première sortie de gaz s'ouvrant alors sur le conduit d'évacuation de gaz au moins en partie dénoxifiés, et,
   * pour un fonctionnement du module dans une phase de régénération du catalyseur de dénoxification, présentent une dite première entrée de gaz s'ouvrant alors sur le conduit d'alimentation en gaz de régénération et une dite première sortie de gaz s'ouvrant alors sur le conduit d'évacuation de gaz issus de la régénération, et
- des moyens de réglage pour faire fonctionner chaque module soit dans la phase de régénération du catalyseur de dénoxification, soit dans la phase de dénoxification de gaz.

Pour renforcer l'avantage de l'installation proposée dans FR-A-2880287, on recommande même que le réacteur catalytique comprenne :
- un premier compartiment d'entrée dans lequel du gaz à dénoxifier est à introduire par ladite première entrée de gaz communiquant avec le conduit d'alimentation en gaz à dénoxifier;
- un premier compartiment de sortie duquel du gaz au moins en partie dénoxifié est à évacuer par ladite première sortie de gaz communiquant avec le conduit d'évacuation de gaz;
- au moins deux modules séparés, chacun contenant du catalyseur de dénoxification et présentant un premier orifice d'entrée communiquant avec le premier compartiment d'entrée et un premier orifice de sortie communiquant avec le premier compartiment de sortie ;

- un deuxième compartiment d'entrée dans lequel du gaz de régénération est à introduire par ladite première entrée de gaz communiquant avec le conduit d'alimentation en gaz de régénération, chaque module présentant un deuxième orifice d'entrée communiquant avec ledit deuxième compartiment d'entrée du réacteur, et,
- pour chaque module, des moyens d'obturation d'entrée mobiles aptes à obturer sélectivement le premier ou le deuxième orifice d'entrée dudit module.

Pour le traitement en aval du catalyseur, on peut conseiller que le réacteur comprenne en outre:
- un deuxième compartiment de sortie d'où du gaz issu de la régénération du catalyseur est à évacuer, chaque module présentant un deuxième orifice de sortie communiquant avec ledit deuxième compartiment de sortie du réacteur ;
- pour chaque module, des moyens d'obturation de sortie mobiles aptes à obturer sélectivement le premier ou le deuxième orifice de sortie dudit module, lesdits moyens d'obturation d'entrée et de sortie étant agencés pour que chaque module puisse, en fonction des besoins, être traversé soit par les gaz à dénoxifier soit par le gaz de régénération, indépendamment du ou des autres modules.

Concernant l'aspect procédé de traitement de gaz dans ce type d'application, on recommande en premier lieu qu'il comprenne :
- une étape de traitement de gaz à dénoxifier, comprenant :
   * une alimentation en gaz à dénoxifier d'un réacteur catalytique (9) de dénoxification de gaz, par au moins un conduit d'alimentation en gaz à dénoxifier,
   * un traitement du gaz d'alimentation par contact avec un catalyseur apte à dénoxifier une partie au moins dudit gaz,
- une étape de régénération d'une partie au moins du catalyseur, comprenant :
   * une alimentation d'une partie au moins du catalyseur en gaz de régénération,
   * un contact entre ledit catalyseur et le gaz de régénération,
   * une récupération de gaz issu de la régénération,
   * une circulation d'une partie au moins du gaz issu de la régénération et récupéré vers le conduit d'alimentation en gaz à dénoxifier, dans un conduit d'alimentation en gaz de régénération,
   * un piquage ultérieur de gaz, sur ledit conduit d'alimentation, dans un conduit de piquage,
   * un chauffage du gaz circulant dans le conduit de piquage jusqu'à une température adaptée à la régénération du catalyseur,
   * et une circulation du gaz chauffé vers ladite alimentation en gaz de régénération, avec comme particularité additionnelle que, dans l'étape de régénération, entre ledit piquage et l'alimentation en gaz de régénération d'une partie au moins du catalyseur, on chauffe le gaz circulant dans le conduit de piquage par échange thermique avec une partie au moins du gaz issu de la régénération.

De préférence, pour la performance thermique déjà évoqué, l'échange thermique se déroulera avant ledit chauffage du gaz circulant dans le conduit de piquage jusqu'à une température adaptée à la régénération du catalyseur par l'intermédiaire :
- d'un brûleur, ou
- d'un échangeur de chaleur où circulent, sans se mélanger, du gaz circulant dans le conduit de piquage et, à température plus élevée que la sienne, des produits chauds.

Et on conseille même que, favorablement, l'échange thermique se déroule avant ledit chauffage du gaz circulant dans le conduit de piquage jusqu'à une température adaptée à la régénération du catalyseur.

Quant à l'avantage des régénération et dénoxification par modules séparés, déjà présentées, on la favorisera si pendant l'étape de régénération, on fait circuler le gaz de régénération vers ladite partie du catalyseur, dans au moins un premier module du réacteur catalytique parmi plusieurs modules séparés les uns des autres qui chacun contiennent une partie du catalyseur de dénoxification, sans que s'y déroule alors l'étape de traitement de gaz à dénoxifier, laquelle se déroule par contre dans certains au moins des autres modules séparés, par alimentation de ceux-ci en gaz à dénoxifier via le conduit d'alimentation en gaz à dénoxifier.

D'autres objets et avantages de l'invention apparaîtront au cours de la rescription qui suit, faite en référence aux dessins annexés, dans lesquels :

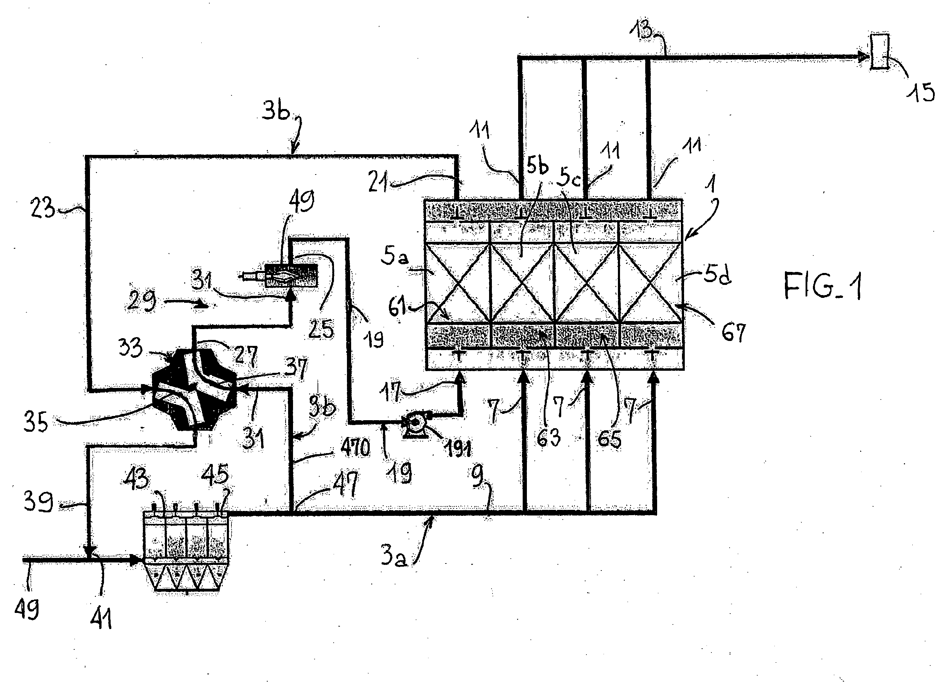

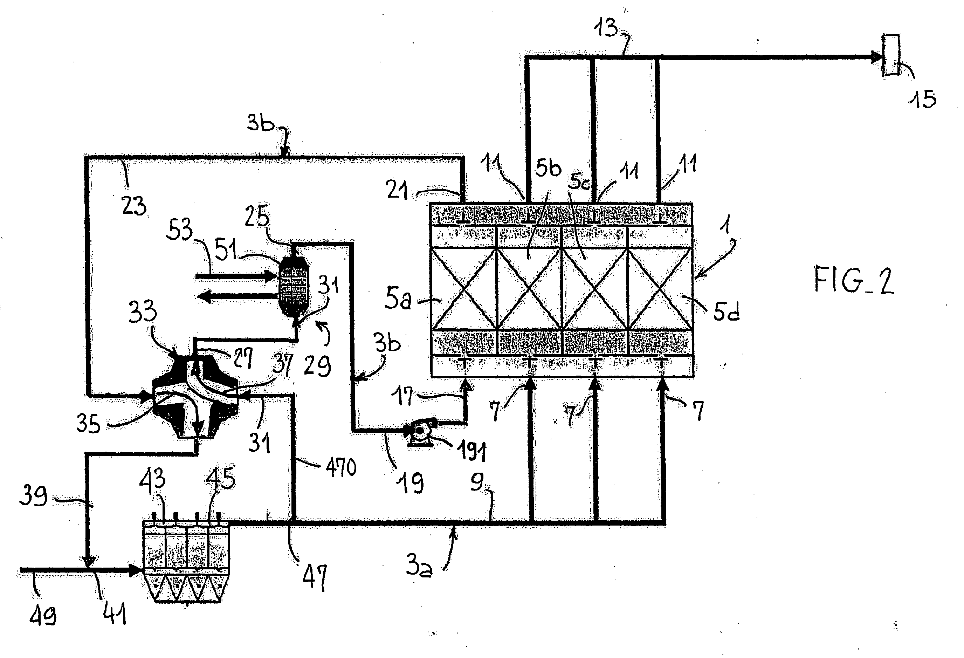

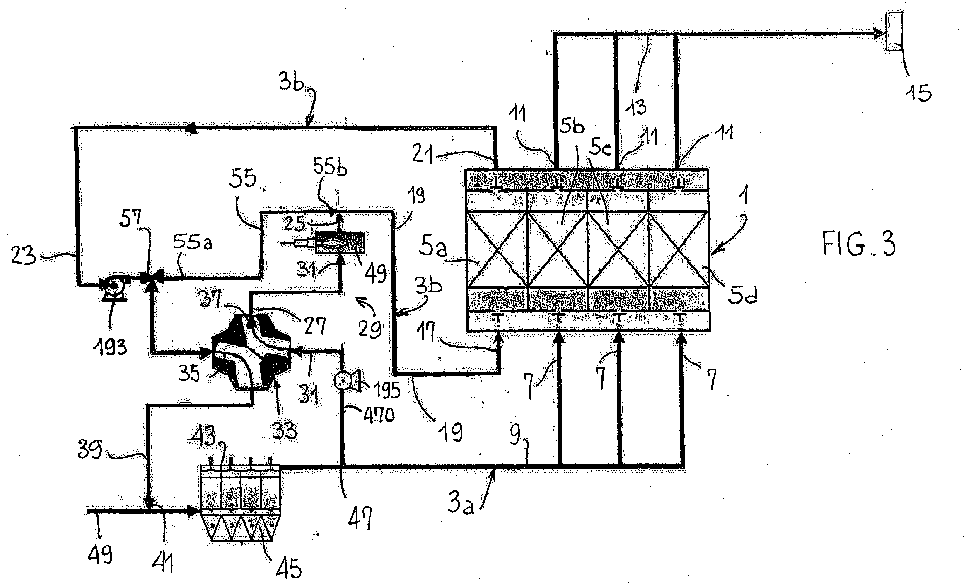

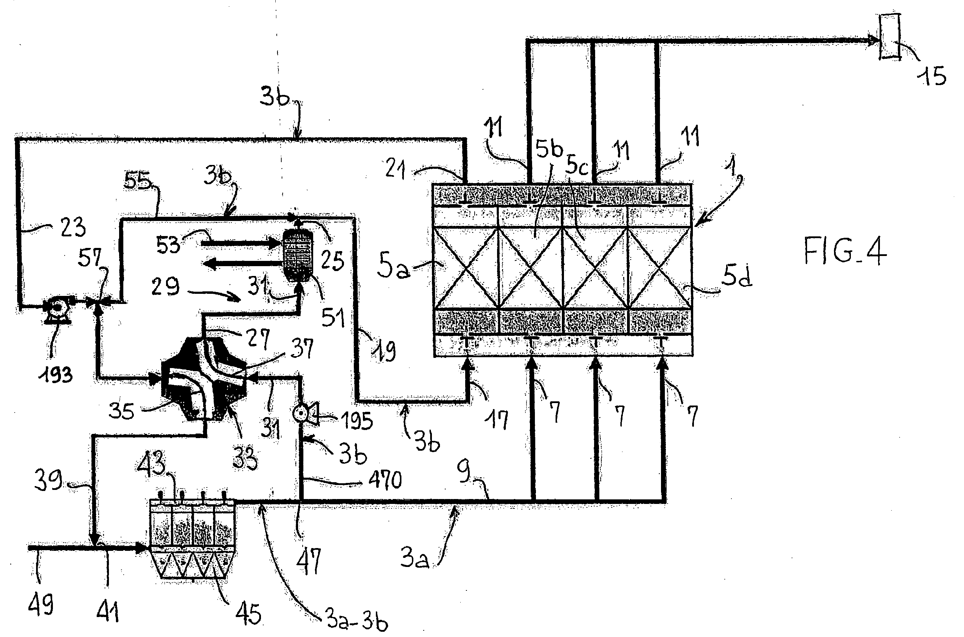

- les figures 1,2,3,4 schématisent une installation de traitement de gaz comprenant un réacteur catalytique de dénoxification de gaz où une régénération du catalyseur est prévue avec utilisation d'un récupérateur et avec (figures 3,4) ou sans (figures 1,2) recyclage de gaz issu de la régénération ; et

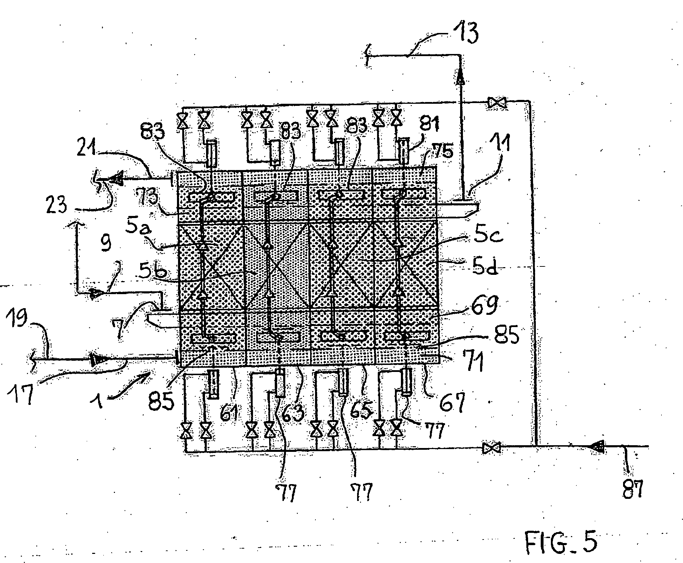

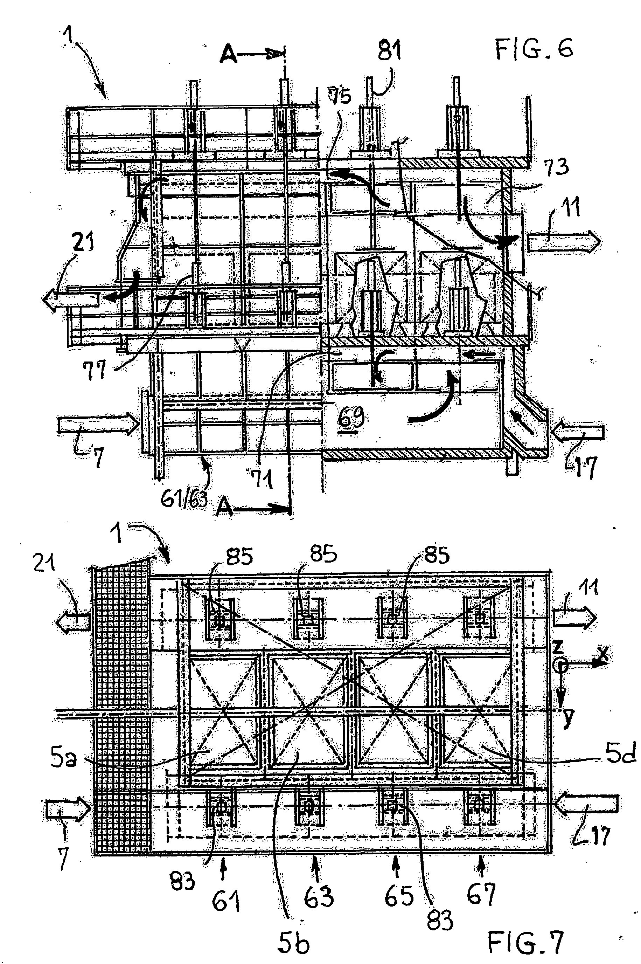

- la figure 5 peut être considérée comme une illustration locale de l'installation de dénoxification de gaz selon l'une des figures 1-4, la figure 6 est une vue en élévation et partiellement en coupe verticale du réacteur catalytique de la figure 5, la figure 7 est une vue de dessus du réacteur catalytique de la figure 6, et les figures 8,9 sont des vues en coupe d'un module du réacteur catalytique, selon la ligne AA de la figure 6, illustrant l'écoulement des gaz, respectivement en mode de traitement et en mode de régénération.

Figures 1 à 4, on voit donc quatre variantes d'une installation de traitement de gaz comprenant un réacteur catalytique 1 de dénoxification de gaz qui peut être à modules ou compartiments individuels 61,63,65,67 permettant de gérer de façon différenciée la régénération d'une partie au moins du catalyseur du réacteur et le traitement, dans le réacteur, du gaz à dénoxifier.

Les figures 5 et 6 montrent une réalisation possible, préférée, d'un tel réacteur si tel est le choix.

Figures 1 à 4, on voit l'installation de traitement de gaz comprend un circuit 3a de traitement de gaz à dénoxifier où est interposé le réacteur catalytique 1 de dénoxification de gaz et un circuit 3b de régénération d'une partie au moins du catalyseur 5a,5b,5c,5d du réacteur catalytique.

Sur le circuit 3a de traitement de gaz à dénoxifier, le réacteur catalytique 1 présente au moins une première entrée 7 de gaz communiquant avec un conduit 9 d'alimentation en gaz à dénoxifier et au moins une première sortie 11 de gaz communiquant avec un conduit 13 d'évacuation de gaz au moins en partie dénoxifié, ici vers une cheminée 15 d'évacuation à l'air libre.

Sur le circuit 3b de régénération de la partie concernée du catalyseur, on trouve une première entrée 17 de gaz dans le réacteur catalytique communiquant en amont avec le conduit 19 d'alimentation en gaz de régénération, lequel est adapté à régénérer le catalyseur. On trouve aussi une première sortie de gaz 21 communiquant en aval avec le conduit 23 d'évacuation de gaz issu de la régénération.

Le conduit 19 d'alimentation en gaz de régénération communique en amont avec une sortie 25 ou 27 de gaz de moyens 29 de chauffage de gaz dont une entrée de gaz 31 communique en amont avec le conduit 9 d'alimentation en gaz à dénoxifier.

Un ventilateur 191 peut entraîner ou favoriser la circulation de gaz dans le conduit 19, entre la sortie 25 et l'(ou chaque) entrée 17, en l'absence de recyclage (cas des figures 1,2). Un autre ventilateur 193 peut entraîner ou favoriser la circulation de gaz dans le conduit 23, vers la vanne de répartition 57 (cas des figures 3,4) ; idem avec le ventilateur 195 sur le conduit 470, entre les zones 47 et 31 (peut être aussi prévu figures 1,2).

De manière classique le réacteur contient un catalyseur, ici réparti en quatre zones 5a,5b,5c,5d. Par contact dans lé réacteur avec le gaz admis aux entrées 7, le catalyseur est apte à dénoxifier une partie au moins de ce gaz.

Figures 1 à 4, la configuration de l'installation est telle que, dans le réacteur, la partie du réacteur renfermant le catalyseur, 5a, est sur le circuit 3a et reçoit le gaz de régénération à la première entrée 17, tandis que les parties 5b, 5c, 5d du réacteur renfermant le reste du catalyseur reçoivent du gaz à dénoxifier, par la première entrée 7. Dans ce cas, et bien qu'elles n'aient pas été représentées, on doit considérer, respectivement :
- que la première entrée 17 de chaque partie 5b,5c,5d est fermée, ce qui ne lui permet alors pas de communiquer directement, à ce moment, en amont du réacteur, avec le conduit 9 d'alimentation en gaz à dénoxifier, et, en aval du réacteur, avec la première sortie 21 de gaz issu de la régénération (puisque la régénération du catalyseur ne s'y opère pas à ce moment),
- tandis que la première entrée 7 de gaz à dénoxifier de la partie 5a est alors fermée, ce qui ne lui permet pas de communiquer à ce moment, en amont du réacteur, avec le conduit 19 d'alimentation en gaz de régénération, et, en aval du réacteur, avec la première sortie 11 d'évacuation de gaz traité, au moins en partie dénoxifié (puisqu'alors, dans cette partie du réacteur, la dénoxification a laissé momentanément la place à la régénération de la partie concernée du catalyseur).

Selon une particularité importante, les moyens 29 de chauffage de gaz comprennent un échangeur gaz/gaz, appelé aussi récupérateur, 33 où circulent, sans se mélanger, à une première température, une partie au moins du gaz 35 issu de la régénération (conduit 23 circuit 3b) et, à une seconde température inférieure à la première, du gaz 37 issu du conduit 9 d'alimentation en gaz à dénoxifier (circuit 3a).

De fait, les circuits 3a,3b seront de préférence partiellement communs si, comme préféré et illustré figures 1 à 4, le conduit 39 d'évacuation de gaz issu de la régénération communique avec le conduit 9 d'alimentation en gaz à dénoxifier, en aval de l'échangeur gaz/gaz 33, pour un mélange de gaz.

De préférence, cette communication 41 entre les conduits 9 et 39 sera située en amont d'un appareillage de traitement 43,45 apte à diminuer la teneur de gaz à dénoxifier en aval, dans le conduit 9 (circuit 3a) en au moins l'un des composés suivants: SO₂, HCl.

Figures 1 à 4, et comme conseillé pour l'efficacité de l'installation dans son ensemble, l'appareillage de traitement 43,45 est situé en amont du piquage 47 de gaz allant vers les moyens 29 de chauffage de gaz (circuit 3b).

Au sein de l'appareillage de traitement, les gaz à traiter, qu'il s'agisse uniquement de gaz à dénoxifier 3. issu de l'admission 49, ou d'un mélange entre lui et le gaz issu du conduit 39, on conseille que le(s) gaz soi(en)t tout d'abord introduit(s) dans un appareil 43 de traitement du HCI, S02 puis passe(nt) dans l'équipement de filtration 45 permettant un dépoussiérage du/des gaz.

En aval du piquage 47, on trouve donc, dans le circuit 3b et selon une particularité importante, la partie de l'échangeur gaz/gaz, ou récupérateur, 33 qui laisse passer le gaz issu de ce piquage, en échange thermique avec le gaz plus chaud issu de la sortie 21, c'est-à-dire contenant le gaz issu de la régénération (conduit d'évacuation 23).

Outre ce récupérateur 33, on voit, toujours sur les figures 1 à 4, que les moyens 29 de chauffage de gaz comprennent l'un parmi un brûleur 49 à gaz combustible et un échangeur de chaleur 51 où circulent, sans se mélanger :
- des produits externes 53 qui arrivent chauds dans l'échangeur de chaleur, de préférence à 20°C au-dessus de la température de sortie en 25, soit a priori plus de 350°C et avantageusement à plus de 380°C, et,
- du gaz (circuit 3b) qui, à une température inférieure à celle des produits arrivants, est reçu à l'entrée 31 de gaz qui communique avec le conduit 9 d'alimentation en gaz à dénoxifier.

Favorablement, pour une recherche de performance thermique, les produits qui arriveront dans l'échangeur de chaleur 51 seront des fumées recyclées issues d'une chaudière ou de la vapeur d'un cycle de valorisation énergétique.

Avec le brûleur 49 à gaz combustible, on recommande que la sortie 25 du conduit 470 qui le traverse, et où circule donc, sur le circuit 3b, du gaz issu du conduit 9 d'alimentation en gaz à dénoxifier, soit à une température de plus de 320°C, et avantageusement à plus de 340°C (de préférence de l'ordre de 350°C) en l'absence de recyclage (figure 1) et à plus de 350°C (de préférence de l'ordre de 370°C) en cas de recyclage (conduit 55, figure 3 d'où les gaz peuvent arriver à environ 335-345°C), afin que les gaz dans le conduit 19 soient ainsi portés à environ 350°C (en mélange avec ceux du conduit 55, dans le cas de la figure 3).

Figures 1,2, l'intégralité du gaz issu de la régénération, et donc circulant dans le conduit de récupération 23, est apporté dans le conduit 9 d'alimentation en gaz à dénoxifier, après passage dans l'échangeur gaz/gaz 33 (conduit 35). Aucun recyclage du gaz issu directement de la régénération n'est alors assuré, par opposition à ce que prévoient les solutions des figures 3,4.

Sur les figures, on trouve donc deux entrées 31 successives disposées en série, l'une qui mène au conduit 37 de l'échangeur gaz/gaz 33, l'autre, en aval, qui mène soit au brûleur à gaz combustible 49 (figure 1), soit à l'échangeur de chaleur 51 (figure 2).

Dans les deux cas illustrés, l'entrée 31 qui mène au conduit 37 de l'échangeur gaz/gaz 33 est raccordée en amont directement au piquage 47.

Typiquement, des vannes (non représentées) permettront de doser les répartitions de gaz, en 41,47 et/ou entre les circuits 3a et 3b.

Ainsi, figure 1, recommande t'on de préférence que l'on puisse alimenter le piquage 41 avec un débit de gaz de 5 kNm3/h. Ce débit sera alors a priori celui dans le conduit 470 et donc à l'entrée 17 de la partie concernée du réacteur : 5a,5b,5c ou 5d.

Plus généralement, on prévoit de pouvoir monter à un débit de gaz de régénération de 10-12 kNm3/h dans le conduit de régénération 23, quelle que soit la solution retenue (figs. 1-4).

S'il y a recyclage, on recommande de préférence que, sur un flux de gaz de « X », par exemple 5 kNm3/h, dans le conduit de récupération 23, on puisse alimenter le piquage 41 avec un débit de gaz de 1/5 du précédent. Un débit équivalent pourra circuler dans le conduit 470. Et un débit quatre fois supérieur circulera favorablement dans le conduit de recyclage 55. Ainsi, le débit total alimentant l'entrée 17 de la partie concernée du réacteur : 5a,5b,5c ou 5d sera alors cinq fois celui issu du piquage 47, dans le conduit 470.

Pour une performance thermique notable, on prévoit par ailleurs figure 1 ou 2:
- que la température de circulation dans le conduit 23 du gaz issu de la régénération soit de l'ordre de 320-360°C, a priori 345°C,
- que la température de ce gaz (non mélangé) en sortie de l'échangeur gaz/gaz 33 (conduit 35) soit de l'ordre de 200-250°C, a priori 220°C,
- que la température du gaz (mélangé) en aval du piquage 41, avant l'entrée 31 dans l'échangeur gaz/gaz 33 (conduit 37) soit de l'ordre de 160-200°C, a priori 180°C,
- que la température du gaz en aval de la sortie 27, avant l'entrée 31 dans le brûleur à gaz 49 ou dans l'échangeur de chaleur 51 soit de l'ordre de 280-330°C, a priori 300-310°C,
- que la température du gaz à la sortie 25 et en aval, donc sensiblement à l'entrée 17 du réacteur, soit de l'ordre de 330-380°C, a priori 350°C à l'entrée 17,.

En alternative au brûleur 49 et échangeur de chaleur 51, on peut aussi prévoir une ou plusieurs batteries de chauffe à vapeur.

Il est toutefois possible de prévoir aussi un recyclage partiel du gaz récupéré dans le conduit 23.

Pour cela, on prévoit figures 3,4 que l'installation comprenne, sur le circuit 3b, un conduit de recyclage 55 pour recycler du gaz issu de la régénération (conduit 23), le conduit de recyclage recevant pour cela ce gaz en entrée et délivrant en sortie du gaz en mélange avec celui ayant déjà circulé dans certains au moins des moyens 29 de chauffage de gaz.

On pourra ainsi favorablement établir un rapport supérieur à 2/1, et de préférence supérieur à 3/1 entre le débit de gaz issu du conduit 23 recyclé dans le conduit 55 et celui partant vers le conduit 9 d'alimentation en gaz à dénoxifier (conduit 39). On conseille en pratique un rapport 4/1.

On recommande même pour la performance thermique qu'une vanne de répartition 57 soit disposée à l'endroit du piquage pour que le débit de gaz issu de la régénération partant vers le conduit 55 soit 3 à 6, et de préférence environ 4 fois, plus important que celui partant vers le conduit 9 d'alimentation en gaz à dénoxifier. Ainsi, on conseille en pratique un rapport 4/1.

En termes de construction, on conseille que le conduit de recyclage 55 soit connecté :
- à une extrémité amont 55a, au conduit d'évacuation 23 de gaz issu de la régénération (zone de la vanne 57), en amont de leur entrée dans l'échangeur gaz/gaz 33,
- à une extrémité aval 55b, entre la sortie 25 la plus chaude des moyens 29 de chauffage de gaz et la première entrée 17 de gaz de régénération dans le réacteur catalytique.

On conseille que ces deux caractéristiques cumulées de raccordements 55a et 55b soient satisfaites.

Concernant maintenant le mélange possible en aval, via la vanne prévue à l'extrémité de raccordement aval 55b, il est conseillé que le conduit de recyclage 55 apporte, dans le conduit 19 d'alimentation en gaz de régénération du réacteur catalytique 1 (pour la régénération du catalyseur), en un endroit situé entre les moyens de chauffage 29 des gaz (de préférence la sortie 25) et ladite première entrée 17 de gaz de régénération dans ce réacteur, un débit volumique de gaz issu de la régénération (conduit 23) supérieur à au moins deux fois, et de préférence à au moins trois fois, celui issu du conduit d'alimentation en gaz à dénoxifier (via le piquage 47). µUn rapport de 5 à 1 sera optimal.

Figure 5 et suivantes on voit plus en détails une possible réalisation du réacteur catalytique 1 dans une version à compartiments séparés.

Le réacteur présenté comprend plusieurs modules 61,63,65,67, séparés les uns des autres qui peuvent être utilisés sur le réacteur des figures 1-4.

Chaque module peut, comme illustré :
- contenir du catalyseur de dénoxification, dans les zones respectivement 5a,5b,5c,5d,
- et, pour un fonctionnement du module considéré dans une phase de dénoxification des gaz, présenter la (l'une des) première(s) entrée(s) de gaz 7 s'ouvrant alors sur le conduit d'alimentation en gaz à dénoxifier 9 et la (l'une des) première(s) sortie(s) de gaz 11 s'ouvrant alors sur lé conduit 13 d'évacuation à une cheminée du gaz au moins en partie dénoxifiés dans le réacteur, et,
- pour un fonctionnement du module dans une phase de régénération (de la partie considérée) du catalyseur de dénoxification, présenter la (l'une des) première(s) entrée (s) 17 de gaz s'ouvrant alors sur le conduit 19 d'alimentation en gaz de régénération et une dite première sortie de gaz 21 s'ouvrant alors sur le conduit 23 d'évacuation de gaz issu de la régénération.

Le réacteur comprend aussi des moyens de réglage tels 77,81,83,85 pour faire fonctionner chaque module soit dans la phase de régénération du catalyseur de dénoxification (circuit 3a), soit dans la phase de dénoxification de gaz (circuit 3b).

Plus précisément, on peut favorablement choisir que, comme illustré, le réacteur catalytique 1 comprenne:
- un premier compartiment d'entrée 69 dans lequel du gaz à dénoxifier est à introduire par ladite (les) première(s) entrée(s) de gaz 7 communiquant avec le conduit d'alimentation en gaz à dénoxifier,
- un premier compartiment de sortie 73 duquel du gaz au moins en partie dénoxifié est à évacuer par ladite (les) première(s) sortie(s) de gaz 11 communiquant avec le conduit d'évacuation de gaz 13;
- au moins deux modules (tels 61,63) séparés, chacun contenant du catalyseur de dénoxification (tels 5a,5b) et présentant (au moins) un premier orifice d'entrée 70 communiquant avec le premier compartiment d'entrée 69 (et donc avec l'entrée 7 concernée) et un premier orifice de sortie 110 communiquant avec le premier compartiment de sortie 73, et donc avec la sortie 11 concernée;
- un deuxième compartiment d'entrée 71 dans lequel du gaz de régénération est à introduire à partir de ladite première entrée 17 de gaz communiquant avec le conduit 19 d'alimentation en gaz de régénération, chaque module présentant un deuxième orifice d'entrée 190 communiquant avec le deuxième compartiment d'entrée 71 du réacteur, et,
- pour chaque module 61, 63... des moyens d'obturation d'entrée 77 mobiles aptes à obturer sélectivement le premier ou le deuxième orifice d'entrée, 70 oul90, du module concerné.

On recommande par ailleurs, pour limiter encore les rejets polluants, que l'installation comprenne en outre, comme illustré :
- un deuxième compartiment de sortie 75 d'où du gaz issu de la régénération du catalyseur est à évacuer, chaque module 61,63... présentant un deuxième orifice de sortie 79 communiquant avec ledit deuxième compartiment de sortie 75 du réacteur, et donc avec la sortie 21 concernée
- et, pour chaque module, des moyens d'obturation de sortie 81 mobiles aptes à obturer sélectivement le premier ou le deuxième orifice de sortie 110,79 dudit module, les moyens d'obturation d'entrée et de sortie 77,81 étant agencés pour que chaque module puisse, en fonction des besoins, être traversé soit par les gaz à dénoxifier (conduit 9) soit par le gaz de régénération (conduit 19), indépendamment du ou des autres modules.

Sur les illustrations :
- un volet d'obturation 83 apte à être déplacé par un vérin (tel un des moyens 81) obture ou ouvre le premier orifice de sortie 110,
- et un volet d'obturation 85 apte à être déplacé par un vérin (tel un des moyens 77) obture ou ouvre le deuxième orifice d'entrée 190.

Ces vérins 77,81 peuvent être actionnés par l'injection d'air comprimé 87 de façon sélective, grâce à un système de d'électrovannes (voir figure 5).

En utilisant certaines au moins des caractéristiques qui précèdent, on va pouvoir éviter que la régénération du catalyseur implique l'arrêt du fonctionnement du réacteur catalytique en mode normal de traitement (dénoxification). En phase de régénération, il sera possible de traiter les gaz avant leur rejet à la cheminée. Compte tenu des contraintes imposées sur les rejets, il n'est donc alors pas nécessaire d'arrêter également les installations situées en amont du réacteur, telle une usine d'incinération.

A noter également, qu'à la différence de la solution de FR-A-2855767 (qui peut toutefois bénéficier des solutions des figures 1-4), et où le réacteur est divisé en modules distincts dont certains peuvent être en phase de régénération tandis que, simultanément, les autres sont en mode de fonctionnement normal et permettent la dénoxification des gaz à traiter, la solution des figures 5 et suivantes évite que les gaz issus de la régénération soient évacués avec les gaz traités. Ainsi, on évite que les gaz issus de la régénération et contenant sous forme de gaz les polluants issus des sels ôtés du catalyseur (HCI, S02, NH3) soient rejetés à l'atmosphère au-delà des teneurs maximales réglementaires.

En outre, on évite ainsi que le réacteur soit de conception relativement lourde, et nécessite notamment de nombreux organes de commande (vérins, etc.).

Le procédé de traitement de gaz ici mis en oeuvre, en utilisant de préférence tout ou partie des moyens qui précèdent comprendra favorablement ce qui suit:
- une étape de traitement de gaz à dénoxifier, comprenant :
   * l'alimentation en gaz à dénoxifier du réacteur catalytique de dénoxification de gaz, par au moins le conduit 9 d'alimentation en gaz à dénoxifier (circuit 3a),
   * le traitement du gaz d'alimentation par contact avec un catalyseur (5a,5b..) apte à dénoxifier une partie au moins dudit gaz,
- une étape de régénération d'une partie au moins du catalyseur, comprenant :
   * l'alimentation d'une partie au moins du catalyseur en gaz de régénération (conduit 19, circuit 3b),
   * un contact entre le catalyseur concerné et le gaz de régénération,
   * la récupération de gaz issu de la régénération (conduit 21),
   * la circulation d'une partie au moins du gaz récupéré issu de la régénération vers le conduit d'alimentation en gaz à dénoxifier 9, via le conduit 23 d'alimentation en gaz de régénération,
   * le piquage ultérieur de gaz sur le conduit 9 (en 47), dans le conduit de piquage 470,
   * le chauffage du gaz circulant dans ce conduit de piquage 470 jusqu'à une température adaptée à la régénération du catalyseur (température atteinte dans le conduit 19, en aval des moyens de chauffage 29 et du possible raccordement aval 55b du conduit de recyclage 55),
   * et la circulation du gaz ainsi chauffé vers ladite alimentation 17 en gaz de régénération, avec une température du gaz à cette entrée 17 du réacteur de l'ordre a priori de 350°C (à environ 5°C près).

Une caractéristique importante sera alors que, dans l'étape de régénération, entre le piquage 47 et l'alimentation en gaz de régénération d'une partie au moins du catalyseur, on chauffe le gaz circulant dans le conduit de piquage 470 par échange thermique (donc dans un échangeur gaz/gaz, sans mélange) avec une partie au moins du gaz issu de la régénération (conduit 35).

De préférence, l'échange thermique dans l'échangeur gaz/gaz ou récupérateur 33 se déroulera avant ledit chauffage (via les moyens de chauffage 29) du gaz circulant dans le conduit de piquage jusqu'à une température adaptée à la régénération du catalyseur par l'intermédiaire :
- du brûleur 25, ou
- de l'échangeur de chaleur 51 où circulent donc, sans se mélanger, du gaz issu du conduit de piquage 470 et, à température plus élevée que la sienne, les produits chauds 53.

On recommande pour la performance thermique recherchée que l'échange thermique dans l'échangeur/récupérateur 33 se déroule avant que les moyens de chauffage 29 chauffe donc le gaz circulant dans le conduit 470 jusqu'à la température adaptée à la régénération du catalyseur.

Et pour favoriser la souplesse d'utilisation précitée entre dénoxification et régénération, on conseille même que, pendant l'étape de régénération, on fasse circuler le gaz de régénération (conduit 19) vers ladite partie à régénérer du catalyseur, dans au moins un (par exemple 61) des modules 61,63,65... du réacteur 1, chacun contenant donc une partie du catalyseur de dénoxification 5a,5b..., sans que s'y déroule alors l'étape de traitement de gaz à dénoxifier, laquelle se déroulera par contre dans certains au moins des autres modules séparés (ici 63,65,67) par alimentation de ceux-ci en gaz à dénoxifier via le conduit 9 d'alimentation en gaz à dénoxifier.

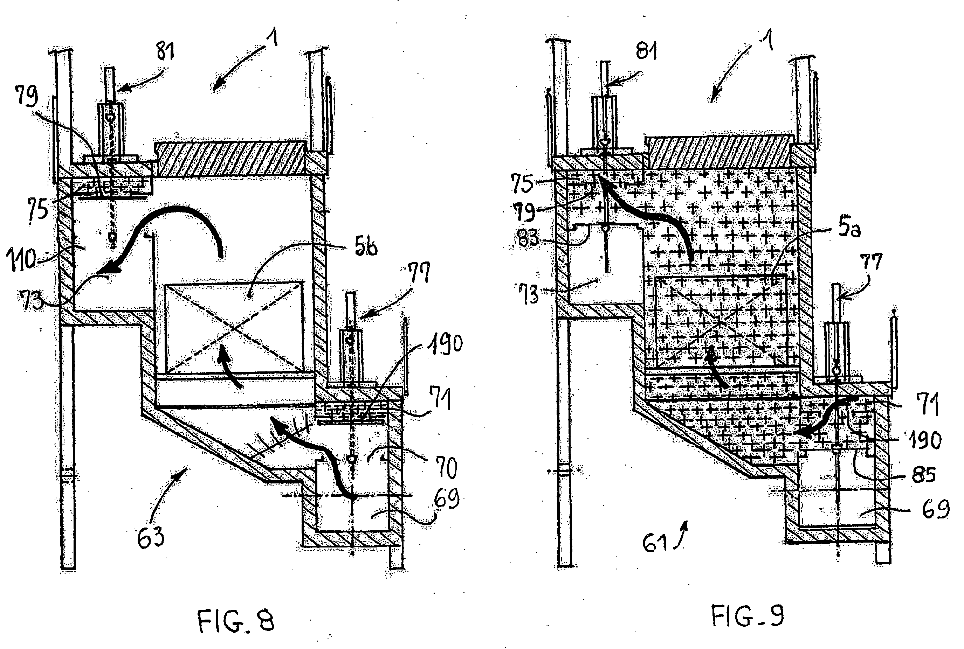

Dans un tel cadre, le procédé de dénoxification des gaz à traiter peut s'opérer comme suit, en référence notamment aux figures 1,8 :
Comme indiqué précédemment, les gaz du conduit 9 sont amenés dans le premier compartiment d'entrée 69 du réacteur, via l'un des accès 7 communiquant avec chacun des modules concernés, par exemple 63,65,67 sur la figure 1. Les vérins 77 du ou des modules aptes à assurer la dénoxification sont dans la position telle que le deuxième orifice d'entrée 190 est obturé, tandis que les vérins 81 sont dans la position telle que le deuxième orifice de sortie 79 est obturé. Par exemple dans le module 63 (figure 8), les gaz qui y pénètrent traversent le bloc catalyseur 5b puis pénètrent dans le premier compartiment de sortie 73 avant d'être évacués par le conduit 13, via la sortie 11 concernée. En fonctionnement normal, tous les modules fonctionnent ainsi en parallèle.

La dénoxification peut alors s'opérer en parallèle dans tous les modules. La température des gaz à traiter, en entrée du réacteur, peut être comprise entre 165 et 240°C, de préférence entre 185 et 200°C environ. A cette température, il se forme des sels qui contaminent la surface du catalyseur et en diminue progressivement l'efficacité.

L'activité du catalyseur est régulièrement suivie. L'augmentation de la teneur en NH3 dans les gaz rejetés à la cheminée 15, au-delà d'un certain seuil, indique que le catalyseur n'est plus suffisamment performant.

Un ou plusieurs modules sont alors isolés et ne fonctionnent plus en phase de traitement, mais en phase de régénération (figure 9).

La phase de régénération comprend en particulier une étape de déchloration/désulfuration.

Pour le module concerné, tel celui 61 figure 1, le vérin 77 est dans la position telle que le premier orifice d'entrée 70 est obturé, tandis que le vérin 37 est dans la position telle que le premier orifice de sortie 32 est obturé.

Ledit module 61 est alimenté par les gaz de régénération (conduit 19) du fait de la température d'entrée de ces gaz dans le réacteur, il se produit une sublimation des sels déposés sur le catalyseur, qui sont évacués sous forme de gaz (notamment SO2, HCI, NH3). La régénération du catalyseur concerné (ici 5a) s'opère. En effet, les gaz de régénération pénètrent dans le module en cause par le deuxième compartiment d'entrée 71, traversent le bloc catalyseur 5a, puis pénètrent dans le deuxième compartiment de sortie 75 avant d'être évacués par le conduit 23, via la sortie 21.

Simultanément, les gaz à traiter peuvent pénétrer via les premiers compartiments d'entrée 69 et de sortie 73 dans les modules en phase de dénoxification. Ainsi, par une simple commande des vérins 77,81, la régénération d'un module n'entraîne pas l'arrêt de l'installation et les gaz admis en 49 peuvent toujours être traités en continu. On augmente ainsi la durée de vie du catalyseur sans perte de capacité de fonctionnement de l'installation.

Les produits sublimés sont évacués avec les gaz issus de la régénération du conduit 23, séparément des gaz traités arrivant dans le conduit 13. De ce fait, les produits sublimés ne sont pas rejetés à l'atmosphère mais sont recyclés. En fin de phase de régénération, de l'air ambiant peut être injecté dans le deuxième compartiment d'entrée 71, afin de le purger et d'éviter ainsi les problèmes de corrosion. Le passage des gaz recyclés dans le récupérateur 33 améliore le rendement thermique.

## Revendications

1. Installation de traitement de gaz, comprenant :
- un circuit (3a) de traitement de gaz à dénoxifier où est disposé un réacteur catalytique (1) de dénoxification de gaz qui :
-- présente une première entrée de gaz à dénoxifier (7) communiquant avec un conduit d'alimentation en gaz à dénoxifier (9) et une première sortie de gaz dénoxifié (11) communiquant avec un conduit d'évacuation de gaz au moins en partie dénoxifié,
-- et contient un catalyseur (5a, 5b, 5c, 5d) apte à dénoxifier une partie au moins -du gaz entré dans le réacteur catalytique et au contact duquel passe une partie au moins dudit gaz entré,
- un circuit (3b) de régénération d'une partie au moins.du catalyseur du réacteur catalytique, ce circuit présentant une première entrée (17) de gaz de régénération dans le réacteur catalytique communiquant en amont avec un conduit (19) d'alimentation en gaz de régénération adapté à régénérer le catalyseur et une première sortie de gaz issu de la régénération (21) communiquant avec un conduit (23,39) d'évacuation de gaz issu de la régénération, le conduit (19) d'alimentation en gaz de régénération communiquant avec une sortie (25,27) de gaz de moyens (29) de chauffage de gaz dont une entrée (31) de gaz communique avec le conduit d'alimentation en gaz à dénoxifier (9),
**caractérisée en ce que** les moyens (29) de chauffage de gaz comprennent un échangeur gaz/gaz (33) où circulent, sans se mélanger, à une première température, une partie au moins du gaz issu de la régénération et, à une seconde température inférieure à la première, du gaz issu du conduit (9) d'alimentation en gaz à dénoxifier.

2. Installation selon la revendication 1, où le conduit (23) d'évacuation de gaz issu de la régénération communique avec le conduit (9) d'alimentation en gaz à dénoxifier, en aval de l'échangeur gaz/gaz (33), pour un mélange de gaz.

3. Installation selon la revendication 2, où la communication entre le conduit (23,39) d'évacuation de gaz issu de la régénération et celui (9) d'alimentation en gaz à dénoxifier est située en amont d'au moins un appareil de traitement (43,45) apte à diminuer la teneur de gaz à dénoxifier en au moins l'un des composés suivants: SO₂, HCl, lui-même disposé en amont d'un piquage de gaz vers les moyens (29) de chauffage de gaz.

4. Installation selon l'une des revendications 1 à 3, où les moyens (29) de chauffage des gaz comprennent l'un parmi :
- un brûleur (49) à gaz combustible dont une entrée (31) reçoit du gaz issu du conduit (9) d'alimentation en gaz à dénoxifier, et,
- un échangeur de chaleur (51) où circulent, sans se mélanger :
* des produits (53) qui arrivent chauds dans l'échangeur de chaleur, et
* les gaz reçus, moins chauds, à ladite entrée (31) de gaz qui communique avec le conduit (9) d'alimentation en gaz à dénoxifier.

5. Installation selon l'une des revendications 1 à
- 4, où l'intégralité du gaz issu de la régénération est apporté dans le conduit (9) d'alimentation en gaz à dénoxifier, après passage dans l'échangeur gaz/gaz (33).

6. Installation selon l'une des revendications 1 à 4, qui comprend un conduit de recyclage (55) pour recycler du gaz issu de la régénération, le conduit de recyclage recevant pour cela ce gaz en entrée et délivrant en sortie du gaz en mélange avec celui ayant déjà circulé dans certains au moins des moyens (29) de chauffage de gaz.

7. Installation selon la revendication 6, où le conduit de recyclage est connecté :
- à une extrémité amont (55a), au conduit d'évacuation (23) de gaz issu de la régénération, en amont de leur entrée dans l'échangeur gaz/gaz (33) et,
- à une extrémité aval (55b), entre une sortie la plus chaude des moyens (25) de chauffage de gaz et ladite première entrée (17) de gaz de régénération dans le réacteur catalytique.

8. Installation selon la revendication 6 ou les revendications 6 et 7, où une vanne de répartition est disposée pour répartir le gaz issu de la régénération entre celui entrant dans le conduit de recyclage et celui dirigé vers le conduit d'alimentation en gaz à dénoxifier, dans un rapport supérieur à 2/1, et de préférence supérieur à 3/1.

9. Installation selon l'une des revendications 1 à 8, où le réacteur catalytique (1) comprend :
- plusieurs modules (61,63,65,67) séparés les uns des autres qui, chacun:
* contiennent du catalyseur de dénoxification (5a, 5b, 5c, 5d),
* pour un fonctionnement du module dans une phase de dénoxification des gaz, présentent une dite première entrée de gaz communiquant alors avec le conduit (9) d'alimentation en gaz à dénoxifier et une dite première sortie de gaz communiquant alors avec le conduit (13) d'évacuation de gaz au moins en partie dénoxifiés,
* pour un fonctionnement du module dans une phase de régénération du catalyseur de dénoxification, présentent une dite première entrée de gaz communiquant alors avec le conduit (19) d'alimentation en gaz de régénération et une dite première sortie de gaz communiquant alors avec le conduit d'évacuation (23) de gaz issus de la régénération, et
- des moyens de réglage (77,81,83,85...) pour faire fonctionner chaque module soit dans la phase de régénération du catalyseur de dénoxification, soit dans la phase de dénoxification des gaz.

10. Installation selon l'une des revendications 1 à 8, où le réacteur catalytique comprend :
- un premier compartiment d'entrée dans lequel du gaz à traiter est à introduire par ladite première entrée de gaz communiquant avec le conduit (9) d'alimentation en gaz à dénoxifier;
- un premier compartiment de sortie duquel du gaz au moins en partie dénoxifiés est à évacuer par ladite première sortie de gaz communiquant avec le conduit (13). d'évacuation de gaz;
- au moins deux modules séparés (61,63,65,67), chacun contenant du catalyseur de dénoxification et présentant un premier orifice d'entrée communiquant avec le premier compartiment d'entrée et un premier orifice de sortie communiquant avec le premier compartiment de sortie;
- un deuxième compartiment d'entrée dans lequel du gaz de régénération est à introduire par ladite première entrée de gaz communiquant avec le conduit d'alimentation en gaz de régénération, chaque module présentant un deuxième orifice d'entrée communiquant avec ledit deuxième compartiment d'entrée du réacteur ;
- pour chaque module (61,63,65,67), des moyens d'obturation d'entrée (77) mobiles aptes à obturer sélectivement le premier ou le deuxième orifice d'entrée dudit module.

11. Installation selon la revendication 10 qui comprend en outre:
- un deuxième compartiment de sortie d'où du gaz issu de la régénération du catalyseur est à évacuer, chaque module présentant un deuxième orifice de sortie communiquant avec ledit deuxième compartiment de sortie du réacteur ;
- pour chaque module, des moyens d'obturation de sortie (81) mobiles aptes à obturer sélectivement le premier ou le deuxième orifice de sortie dudit module, lesdits moyens d'obturation d'entrée et de sortie (77, 81) étant agencés pour que chaque module puisse, en fonction des besoins, être traversé soit par les gaz à traiter soit par les gaz de régénération, indépendamment du ou des autres modules.

12. Procédé de traitement de gaz, comprenant :
- une étape de traitement de gaz à dénoxifier, comprenant :
* une alimentation en gaz à dénoxifier d'un, réacteur catalytique de dénoxification de gaz, par au moins un conduit d'alimentation en gaz à dénoxifier,
* un traitement du gaz d'alimentation par contact avec un catalyseur apte à dénoxifier une partie au moins dudit gaz,
- une étape de régénération d'une partie au moins du catalyseur, comprenant :
* une alimentation d'une partie au moins du catalyseur en gaz de régénération,
* un contact entre ledit catalyseur et le gaz de régénération,
* une récupération de gaz issu de la régénération,
* une circulation d'une partie au moins du gaz issu de la régénération et récupéré vers le conduit d'alimentation en gaz à.dénoxifier,
* un piquage ultérieur de gaz, sur ledit conduit d'alimentation, dans un conduit de piquage,
* un chauffage du gaz circulant dans le conduit de piquage jusqu'à une température adaptée à la régénération du catalyseur,
* et une circulation du gaz chauffé vers ladite alimentation en gaz de régénération,
**caractérisé en ce que**, dans l'étape de régénération, entre ledit piquage et l'alimentation en gaz de régénération d'une partie au moins du catalyseur, on chauffe le gaz circulant dans le conduit de piquage par échange thermique avec une partie au moins du gaz issu de la régénération.

13. Procédé de traitement de gaz selon la revendication 12, où l'échange thermique se déroule avant ledit chauffage du gaz circulant dans le conduit de piquage jusqu'à une température adaptée à la régénération du catalyseur par l'intermédiaire :
- d'un brûleur, ou
- d'un échangeur de chaleur où circulent, sans se mélanger, du gaz circulant dans le conduit de piquage et, à température plus élevée que la sienne, des produits chauds.

14. Procédé de traitement de gaz selon la revendication 12 ou 13, où l'échange thermique se déroule avant ledit chauffage du gaz circulant dans le conduit de piquage jusqu'à une température adaptée à la régénération du catalyseur.

15. Procédé de traitement de gaz selon l'une des revendications 12 à 14, où, pendant l'étape de régénération, on fait circuler le gaz de régénération vers ladite partie du catalyseur, dans au moins un premier module du réacteur catalytique parmi plusieurs modules séparés les uns des autres qui chacun contiennent une partie du catalyseur de dénoxification, sans que s'y déroule alors l'étape de traitement de gaz à dénoxifier, laquelle se déroule par contre dans certains au moins des autres modules séparés, par alimentation de ceux-ci en gaz à dénoxifier via le conduit d'alimentation en gaz à dénoxifier.

16. Procédé de traitement de gaz selon la revendication 12, où on recycle du gaz issu de la régénération-dans un conduit de recyclage (55) qui reçoit-pour cela ce gaz en entrée et délivre en sortie du gaz en mélange avec celui ayant déjà circulé dans des moyens (29) prévus pour ledit chauffage du gaz, le conduit de recyclage apportant, dans ladite alimentation du catalyseur en gaz de régénération, en un endroit situé entre les moyens de chauffage (29) des gaz et une première entrée de gaz de régénération dans le réacteur catalytique, un débit volumique de gaz issu de la régénération supérieur à au moins deux fois, et de préférence à au moins trois fois, celui issu du conduit d'alimentation en gaz à dénoxifier.

## Patentansprüche

1. Gasbehandlungsanlage, die Folgendes umfasst:
- ein Kreislaufsystem (3a) zur Behandlung von zu entstickendem Gas, wobei ein katalytischer Reaktor (1) zur Gasentstickung angeordnet ist, der
-- eine erste Öffnung (7) zum Eintritt von zu entstickendem Gas aufweist, wobei diese mit einer Leitung (9) zur Zuführung von zu entstickendem Gas in Verbindung steht, sowie eine erste Öffnung (11) zum Austritt von entsticktem Gas, wobei diese mit einer Leitung zur Abführung von mindestens teilweise entsticktem Gas in Verbindung steht,
-- weiterhin einen Katalysator (5a, 5b, 5c, 5d) enthält, der dazu befähigt ist, mindestens einen Teil des Gases zu entsticken, welches in den katalytischen Reaktor eingeleitet wird, und mit dem mindestens ein Teil des eingeleiteten Gases in Berührung kommt,
- ein Kreislaufsystem (3b) zur Regenerierung mindestens eines Teils des Katalysators des katalytischen Reaktors, wobei dieses Kreislaufsystem eine erste Öffnung (17) aufweist, die zum Eintritt von Regenerierungsgas in den katalytischen Reaktor bestimmt ist und stromaufwärts mit einer Leitung (19) zur Zuführung von Regenerierungsgas in Verbindung steht, welches dazu befähigt ist, den Katalysator zu regenerieren, sowie eine erste Öffnung (21), die zum Austritt von Gas bestimmt ist, das aus der Regenerierung stammt, und mit einer Leitung (23, 39) in Verbindung steht, die zur Abführung von Gas bestimmt ist, das aus der Regenerierung stammt, wobei die Leitung (19) zur Zuführung von Regenerierungsgas mit einer Öffnung (25, 27) zum Austritt von Gas aus Mitteln (29) in Verbindung steht, die zum Erwärmen von Gas bestimmt sind und die eine Öffnung (31) zum Eintritt von Gas aufweisen, welche mit der Leitung zur Zuführung von zu entstickendem Gas in Verbindung steht,
**dadurch gekennzeichnet, dass** die Mittel (29) zur Erwärmung von Gas einen Gas/Gas-Tauscher (33) umfassen, wobei in diesem, bei einer ersten Temperatur, mindestens ein Teil des Gases, das aus der Regenerierung stammt, sowie, bei einer zweiten Temperatur, welche niedriger als die erste ist, Gase, die aus der Leitung (9) zur Zuführung von zu entstickendem Gas stammen, strömen, ohne dass sie sich vermischen.

2. Anlage nach Anspruch 1, wobei die Leitung (23) zur Abführung von Gas, das aus der Regenerierung stammt, stromabwärts des Gas/Gas-Tauschers (33) mit der Leitung (9) zur Zuführung von zu entstickendem Gas in Verbindung steht, um eine Gasmischung zu erzielen.

3. Anlage nach Anspruch 2, wobei die Verbindung zwischen der Leitung (23, 39) zur Abführung von Gas, das aus der Regenerierung stammt, und derjenigen (9) zur Zuführung von zu entstickendem Gas sich stromaufwärts mindestens einer Behandlungsvorrichtung (43, 45) befindet, die dazu befähigt ist, den Gehalt von zu entstickendem Gas an mindestens einer der folgenden Verbindungen zu verringern: SO₂, HCl, wobei sie selbst stromaufwärts einer Abzweigung von Gas in Richtung der Mittel (29) zum Erwärmen von Gas angeordnet ist.

4. Anlage nach einem der Ansprüche 1 bis 3, wobei die Mittel (29) zum Erwärmen der Gase eines der folgenden Elemente umfassen:
- einen Brenngasbrenner (49), der eine Eintrittsöffnung (31) aufweist, die Gas aufnimmt, welches aus der Leitung (9) zur Zuführung von zu entstickendem Gas stammt, und
- einen Wärmetauscher (51), in welchem die folgenden Stoffe strömen, ohne sich zu vermischen:
* Produkte (53), die in warmem Zustand in den Wärmetauscher gelangen, und
* die Gase, welche in weniger warmem Zustand an der Gaseintrittsöffnung (31) aufgenommen werden, die mit der Leitung (9) zur Zuführung von zu entstickendem Gas in Verbindung stehen.

5. Anlage nach einem der Ansprüche 1 bis 4, wobei sämtliches Gas, das aus der Regenerierung stammt, in die Leitung (9) zur Zuführung von zu entstickendem Gas eingeleitet wird, nachdem es durch den Gas/Gas-Tauscher (33) geströmt ist.

6. Anlage nach einem der Ansprüche 1 bis 4, welche eine Rückführungsleitung (55) umfasst, die zur Rückführung des Gases bestimmt ist, welches aus der Regenerierung stammt, wobei die Rückführungsleitung dieses Gas hierfür an der Eintrittsöffnung aufnimmt, um an der Austrittsöffnung ein Gas abzugeben, welches mit demjenigen vermischt ist, das bereits mindestens einige der Mittel (29) zum Erwärmen von Gas durchströmt hat.

7. Anlage nach Anspruch 6, wobei die Rückführungsleitung folgendermaßen angeschlossen ist:
- an ein stromaufwärts gelegenes Ende (55a), an die Leitung (23) zur Abführung des Gases, das aus der Regenerierung stammt, und zwar stromaufwärts von deren Eintritt in den Gas/Gas-Tauscher (33) und,
- an ein stromabwärts gelegenes Ende (55b), zwischen einer wärmsten Austrittsöffnung der Gaserwärmungsmittel (25) und der ersten Öffnung (17) zum Eintritt von Regenerierungsgas in den katalytischen Reaktor.

8. Anlage nach Anspruch 6 oder den Ansprüchen 6 und 7, wobei ein Verteilerventil angeordnet ist, um das Gas, welches aus der Regenerierung stammt, zwischen demjenigen, welches in die Rückführungsleitung eintritt, und demjenigen, welches in Richtung der Leitung zur Zuführung von zu entstickendem Gas geleitet wird, in einem Verhältnis von mehr als 2/1 und vorzugsweise von mehr als 3/1 aufzuteilen.

9. Anlage nach einem der Ansprüche 1 bis 8, wobei der katalytische Reaktor (1) Folgendes umfasst:
- mehrere Module (61, 63, 65, 67), die voneinander getrennt sind, wobei jedes davon:
* einen Entstickungskatalysator (5a, 5b, 5c, 5d) enthält,
* für einen Betrieb des Moduls in einer Phase der Entstickung der Gase, eine als die erste bezeichnete Gaseintrittsöffnung aufweist, welche in diesem Falle mit der Leitung (9) zur Zuführung von zu entstickendem Gas in Verbindung steht, sowie eine als die erste bezeichnete Gasaustrittsöffnung, welche in diesem Falle mit der Leitung (13) zur Abführung von mindestens teilweise entstickten Gasen in Verbindung steht,
* für einen Betrieb des Moduls in einer Phase der Regenerierung des Entstickungskatalysators, eine als die erste bezeichnete Gaseintrittsöffnung aufweist, welche in diesem im Falle mit der Leitung (19) zur Zuführung von Regenerierungsgas in Verbindung steht, sowie eine als die erste bezeichnete Gasaustrittsöffnung, welche in diesem Falle mit der Leitung (23) zur Abführung von Gasen, die aus der Regenerierung stammen, in Verbindung steht,
- Einstellmittel (77, 81, 83, 85...) zum Betrieb jedes der Module entweder in der Phase der Regenerierung des Entstickungskatalysators oder in der Phase der Entstickung der Gase.

10. Anlage nach einem der Ansprüche 1 bis 8, wobei der katalytische Reaktor Folgendes umfasst:
- eine erste Eintrittskammer, in welche zu behandelndes Gas durch die erste Gaseintrittsöffnung, welche mit der Leitung (9) zur Zuführung von zu entstickendem Gas in Verbindung steht, einzuleiten ist;
- eine erste Austrittskammer, aus welcher mindestens teilweise entsticktes Gas durch die erste Gasaustrittsöffnung, welche mit der Gasabführungsleitung (13) in Verbindung steht, abzuführen ist;
- mindestens zwei getrennte Module (61, 63, 65, 67), wobei jedes davon Entstickungskatalysator enthält und eine erste Eintrittsöffnung aufweist, die mit der ersten Eintrittskammer in Verbindung steht, sowie eine erste Austrittsöffnung, die mit der ersten Austrittskammer in Verbindung steht;
- eine zweite Eintrittskammer, in welche Regenerierungsgas durch die erste Gaseintrittsöffnung, welche mit der Leitung zur Zuführung von Regenerierungsgas in Verbindung steht, einzuleiten ist, wobei jedes Modul eine zweite Eintrittsöffnung aufweist, die mit der zweiten Eintrittskammer des Reaktors in Verbindung steht;
- für jedes der Module (61, 63, 65, 67), bewegliche Mittel (77) zum Eintrittsverschluss, welche dazu befähigt sind, wahlweise die erste oder die zweite Eintrittsöffnung des Moduls zu verschließen.

11. Anlage nach Anspruch 10, die darüber hinaus Folgendes umfasst:
- eine zweite Austrittskammer, aus welcher Gas, das aus der Regenerierung des Katalysators stammt, abzuführen ist, wobei jedes der Module eine zweite Austrittsöffnung aufweist, die mit der zweiten Austrittskammer des Reaktors in Verbindung steht;
- für jedes der Module, bewegliche Mittel (81) zum Austrittsverschluss, welche dazu befähigt sind, wahlweise die erste oder die zweite Austrittsöffnung des Moduls zu verschließen, wobei die Eintritts- und Austrittsverschlussmittel (77, 81) derart angeordnet sind, dass jedes der Module, je nach Bedarf und unabhängig von dem oder den anderen Modul(en), entweder von den zu behandelnden Gasen oder von den Regenerierungsgasen durchströmt werden kann.

12. Gasbehandlungsverfahren, das Folgendes umfasst:
- einen Schritt der Behandlung von zu entstickendem Gas, welcher Folgendes umfasst:
* Zuführen von zu entstickendem Gas in einen katalytischen Reaktor zur Gasentstickung, durch mindestens eine Leitung zur Zuführung von zu entstickendem Gas,
* Behandeln des Zuführungsgases durch Kontakt mit einem Katalysator, der dazu befähigt ist, mindestens einen Teil des Gases zu entsticken,
- einen Schritt der Regenerierung mindestens eines Teils des Katalysators, welcher Folgendes umfasst:
* Zuführen von Regenerierungsgas in mindestens einen Teil des Katalysators,
* Inkontaktbringen des Katalysators mit dem Regenerierungsgas,
* Rückgewinnen von Gas, das aus der Regenerierung stammt,
* Strömen mindestens eines Teils des Gases, das aus der Regenerierung stammt und zurückgewonnen wurde, in Richtung der Leitung zum Zuführen von zu entstickendem Gas,
* nachfolgendes Abzweigen von Gas aus der Zuführungsleitung in eine Zweigleitung,
* Erwärmen des Gases, welches in der Zweigleitung strömt, auf eine Temperatur, die zur Regenerierung des Katalysators geeignet ist,
* und Leiten des erwärmten Gases in Richtung der Zuführung von Regenerierungsgas,
**dadurch gekennzeichnet, dass** in dem Regenerierungsschritt, zwischen dem Abzweigen und dem Zuführen von Regenerierungsgas in mindestens einen Teil des Katalysators, das Gas, welches in der Zweigleitung strömt, durch Wärmeaustausch mit mindestens einem Teil des Gases, welches aus der Regenerierung stammt, erwärmt wird.

13. Gasbehandlungsverfahren nach Anspruch 12, wobei der Wärmeaustausch erfolgt, bevor das Gas, welches in der Zweigleitung strömt, mit Hilfe eines der folgenden Mittel auf eine Temperatur erwärmt wird, die zur Regenerierung des Katalysators geeignet ist:
- eines Brenners, oder
- eines Wärmetauschers, in welchem Gas, das in der Zweigleitung strömt, sowie, bei einer im Vergleich zu diesem höheren Temperatur, warme Produkte strömen, ohne sich zu vermischen.

14. Gasbehandlungsverfahren nach Anspruch 12 oder 13, wobei der Wärmeaustausch erfolgt, bevor das Gas, welches in der Zweigleitung strömt, auf eine Temperatur erwärmt wird, die zur Regenerierung des Katalysators geeignet ist.

15. Gasbehandlungsverfahren nach einem der Ansprüche 12 bis 14, wobei während des Regenerierungsschrittes das Regenerierungsgas in Richtung des Teils des Katalysators geleitet wird, in mindestens ein erstes Modul des katalytischen Reaktors von mehreren voneinander getrennten Modulen, wobei jedes davon einen Teil des Entstickungskatalysators enthält, ohne dass in diesem Fall der Schritt der Behandlung von zu entstickendem Gas abläuft, welcher hingegen in mindestens einigen der anderen getrennt angeordneten Module abläuft, indem diesen, über die Leitung zur Zuführung von zu entstickendem Gas, zu entstickendes Gas zugeführt wird.

16. Gasbehandlungsverfahren nach Anspruch 12, wobei das Gas, welches aus der Regenerierung stammt, in eine Rückführungsleitung (55) zurückgeführt wird, die dieses Gas zweckmäßigerweise an der Eintrittsöffnung aufnimmt, und an der Austrittsöffnung ein Gas abgibt, welches mit demjenigen vermischt ist, das bereits Mittel (29) durchströmt hat, die zum Erwärmen des Gases vorgesehen sind, wobei die Rückführungsleitung zur Versorgung des Katalysators mit Regenerierungsgas derart beiträgt, dass ein Volumenstrom an Gas, das aus der Regenerierung stammt, im Vergleich mit demjenigen, welcher aus der Leitung zur Zuführung von zu entstickendem Gas stammt, mindestens zweimal, vorzugsweise mindestens dreimal so stark ist und an einer Stelle eingeleitet wird, die sich zwischen den Mitteln (29) zum Erwärmen der Gase und einer ersten Öffnung zum Eintritt von Regenerierungsgas in den katalytischen Reaktor befindet.

## Claims

1. Gas treatment facility comprising:
- a circuit (3a) for treating gas that is to be denoxified, in which is placed a gas denoxification catalytic reactor (1) which:
-- has a first inlet (7) for gas that is to be denoxified communicating with a supply pipe (9) for gas that is to be denoxified and a first outlet (11) for denoxified gas communicating with a pipe for removing at least partially denoxified gas,
-- and contains a catalyst (5a, 5b, 5c, 5d) able to denoxify at least some of the gas that has entered the catalytic reactor and with which at least some of the said entering gas comes into contact,
- a circuit (3b) for regenerating at least some of the catalyst of the catalytic reactor, this circuit having a first inlet (17) admitting regeneration gas into the catalytic reactor communicating upstream with a supply pipe (19) for regeneration gas suited to regenerating the catalyst and a first outlet (21) for gas derived from the regeneration communicating with a pipe (23, 39) for removing gas derived from the regeneration, the regeneration-gas supply pipe (19) communicating with a gas outlet (25, 27) of gas heating means (29), a gas inlet (31) of which communicates with the pipe supplying gas that is to be denoxified,
**characterized in that** the gas heating means (29) comprise a gas/gas exchanger (33) through which there circulate, without mixing with one another, at a first temperature, at least some of the gas derived from the regeneration and, at a second temperature lower than the first, gas derived from the pipe (9) for supplying gas that is to be denoxified.

2. Facility according to Claim 1, in which the pipe (23) for discharging gas derived from the regeneration communicates with the pipe (9) supplying gas that is to be denoxified, downstream of the gas/gas exchanger (33), for a mixing of gas.

3. Facility according to Claim 2, in which the communication between the pipe (23, 39) for removing gas derived from the regeneration and the one (9) for supplying gas that is to be denoxified, is situated upstream of at least one treatment apparatus (43, 45) able to reduce the content of gas to be denoxified in at least one of the following compounds: SO2, HCl, the apparatus itself being positioned upstream of a tapping of gas for the gas heating means (29).

4. Facility according to one of Claims 1 to 3, in which the gas heating means (29) comprise one of the following:
- a fuel-gas burner (49), one inlet (31) of which receives gas derived from the pipe (9) supplying gas that is to be denoxified, and
- a heat exchanger (51) through which there circulate, without mixing with one another:
* products (53) arriving hot at the heat exchanger, and
* the, less hot, gases received at the said gas inlet (31) that communicates with the pipe (9) supplying gas that is to denoxified.

5. Facility according to one of Claims 1 to 4, in which all of the gas derived from the regeneration is conveyed in the pipe (9) supplying gas that is to be denoxified, after passing through the gas/gas exchanger (33).

6. Facility according to one of Claims 1 to 4 which comprises a recirculation pipe (55) for recirculating gas derived from the regeneration, the recirculation pipe for that purpose receiving this gas at inlet and delivering at outlet gas mixed with the gas that has already circulated through at least some of the gas heating means (29).

7. Facility according to Claim 6, in which the recirculation pipe is connected:
- at an upstream end (55a), to the pipe (23) discharging gas derived from the regeneration, upstream of where these enter the gas/gas exchanger (33), and
- at a downstream end (55b), between a hottest outlet of the gas heating means (25) and the said first inlet (17) admitting regeneration gas into the catalytic reactor.

8. Facility according to Claim 6 or Claim 6 and 7, in which a distributor valve is arranged to distribute the gas derived from the regeneration between the gas that enters the recirculation pipe and the gas directed towards the pipe supplying gas that is to be denoxified, in a ratio higher than 2/1 and preferably higher than 3/1.

9. Facility according to one of Claims 1 to 8, in which the catalytic reactor (1) comprises:
- several modules (61, 63, 65, 67) separated from one another and which each:
* contain some denoxification catalyst (5a, 5b, 5c, 5d),
* for module operation in a gases denoxification phase have one said first gas inlet then communicating with the pipe (9) supplying gas that is to be denoxified and one said first outlet for gas then communicating with the pipe (13) for discharging at least partially denoxified gas,
* for module operation in a denoxification catalyst regeneration phase, have one said first gas inlet then communicating with the regeneration-gas supply pipe (19) and one said first gas outlet then communicating with the pipe (23) discharging gases derived from the regeneration, and
- control means (77, 81, 83, 85, ...) for making each module work either in the denoxification catalyst regeneration phase or in the gases denoxification phase.

10. Facility according to one of Claims 1 to 8, in which the catalytic reactor comprises:
- a first inlet compartment into which gas that is to be treated is to be introduced via the said first gas inlet communicating with the pipe (9) supplying gas that is to be denoxified;
- a first outlet compartment from which at least partially denoxified gas is to be discharged by the said first gas outlet communicating with the gas discharge pipe (13);
- at least two separate modules (61, 63, 65, 67), each one containing denoxification catalyst and having a first inlet orifice communicating with the first inlet compartment and a first outlet orifice communicating with the first outlet compartment;
- a second inlet compartment into which regeneration gas is to be introduced via the said first gas inlet communicating with the pipe supplying regeneration gas, each module having a second inlet orifice communicating with the said second inlet compartment of the reactor;
- for each module (61, 63, 65, 67), mobile inlet shut-off means (77) able selectively to shut off the first or the second inlet orifice of the said module.

11. Facility according to Claim 10 further comprising:
- a second outlet compartment from where gas derived from the regeneration of the catalyst is to be discharged, each module having a second outlet orifice communicating with the said second outlet compartment of the reactor;
- for each module, mobile outlet shut-off means (81) able selectively to shut off the first or the second outlet orifice of the said module, the said inlet and outlet shut-off means (77, 81) being arranged such that each module can, as required, have either the gases that are to be treated or the regeneration gases passing through it independently of the other module or modules.

12. Gas treatment method comprising:
- a step of treating gas that is to be denoxified, comprising:
* supplying a gas denoxification catalytic reactor with gas that is to be denoxified via at least one pipe supplying gas that is to be denoxified,
* treatment of the supply gas by contact with a catalyst able to denoxify at least some of the said gas,
- a step of regenerating at least part of the catalyst, comprising:
* supplying at least part of the catalyst with regeneration gas,
* contact between the said catalyst and the regeneration gas,
* recovery of gas derived from the regeneration,
* circulation of at least some of the gas derived from the regeneration and recovered to the pipe supplying gas that is to be denoxified,
* subsequent tapping-off of gas, from the said supply pipe, into a tapping pipe,
* heating of the gas circulating in the tapping pipe until it reaches a temperature suited to regeneration of the catalyst,
* and circulation of the heated gas towards the said supply of regeneration gas,
**characterized in that**, in the regeneration step, between the said tapping and the supplying of at least part of the catalyst with regeneration gas, the gas circulating in the tapping pipe is heated by exchange of heat with at least part of the gas derived from the regeneration.

13. Gas treatment method according to Claim 12, in which the exchange of heat takes place before the said heating of the gas circulating in the tapping pipe up to a temperature suited to regeneration of the catalyst using:
- a burner, or
- a heat exchanger through which there circulate, without mixing with one another, gas circulating in the tapping pipe and, at a temperature higher than its own, hot products.

14. Gas treatment method according to Claim 12 or 13, in which the exchange of heat takes place before the said heating of the gas circulating in the tapping pipe up to a temperature suited to the regeneration of the catalyst.

15. Gas treatment method according to one of Claims 12 to 14 in which, during the regeneration step, the regeneration gas is circulated toward the said part of the catalyst, in at least a first module of the catalytic reactor from among several modules separated from one another and each containing part of the denoxification catalyst, without the step of treating the gas that is to be denoxified taking place at that time, which step rather takes place in at least some of the other separate modules, by supplying these with gas that is to be denoxified via the pipe supplying gas that is to be denoxified.

16. Gas treatment method according to Claim 12, in which gas derived from the regeneration is recirculated in a recirculation pipe (55) which for that purpose receives this gas at inlet and at outlet delivers gas mixed with the gas that has already circulated through the means (29) provided for the said heating of the gas, the recirculation pipe providing, in the said supply of regeneration gas to the catalyst, at a point situated between the gas heating means (29) and a first inlet for regeneration gas into the catalytic reactor, a volumetric flow rate of gas derived from the regeneration that is more than at least twice, and preferably more than at least three times as high as the flow rate coming from the pipe supplying gas that is to be denoxified.
